(19) Europäisches Patentamt

European Patent Office

Office européen des brevets

(11) Veröffentlichungsnummer : **0 308 409 B1**

# (12) EUROPÄISCHE PATENTSCHRIFT

(45) Veröffentlichungstag der Patentschrift :
**24.04.91 Patentblatt 91/17**

(21) Anmeldenummer : **87903311.6**

(22) Anmeldetag : **22.05.87**

(86) Internationale Anmeldenummer :
**PCT/EP87/00268**

(87) Internationale Veröffentlichungsnummer :
**WO 87/07249 03.12.87 Gazette 87/27**

(51) Int. Cl.⁵ : **C01B 31/08, B01J 20/20**

(54) **VERFAHREN ZUR HERSTELLUNG VON KOHLENSTOFFMOLEKULARSIEBEN.**

(30) Priorität : **31.05.86 DE 3618426**

(43) Veröffentlichungstag der Anmeldung :
**29.03.89 Patentblatt 89/13**

(45) Bekanntmachung des Hinweises auf die
Patenterteilung :
**24.04.91 Patentblatt 91/17**

(84) Benannte Vertragsstaaten :
**AT BE CH DE FR GB IT LI LU NL SE**

(56) Entgegenhaltungen :
**EP-A- 0 077 462**
**EP-A- 0 102 902**
**DE-B- 2 119 829**
**FR-A- 2 258 895**

(73) Patentinhaber : **Bergwerksverband GmbH**
**Franz-Fischer-Weg 61**
**W-4300 Essen 13 (DE)**

(72) Erfinder : **KNOBLAUCH, Karl**
**Semperstr. 55**
**W-4300 Essen (DE)**
Erfinder : **TARNOW, Ferdinand**
**Im Ährenfeld 41**
**W-4100 Duisburg 25 (DE)**
Erfinder : **HEIMBACH, Heinrich**
**Zahnrad 38**
**W-4300 Essen (DE)**

## Beschreibung

Die Erfindung betrifft ein Verfahren zur Herstellung von Kohlenstoffmolekularsieben gemäß dem Oberbegriff des Anspruchs 1.

Es ist aus der DE-PS 21 19 829 bekannt, Kohlenstoffmolekularsiebe für die Trennung kleinmolekularer Gase, insbesondere $O_2$ und $N_2$, durch Behandlung von Schwelgut mit Kohlenstoff abspaltenden Kohlenwasserstoffen, die im Kohlenstoffgerüst des Schwelgutes unter Verengung schon vorhandener Poren reagieren, herzustellen. Derartige Kohlenstoffmolekularsiebe werden in einem Drehrohrofen hergestellt. Der Drehrohrofen wird indirekt beheizt und mit einem Stickstoffstrom gespült.

Der Drehrohrofen besitzt im Verhältnis zu der Füllung mit Kohlenstoffmolekularsieb ein relativ großes Volumen. Das führt zwangsläufig dazu, daß große Inertgasmengen benötigt werden. Im kontinuierlichen Betrieb ergeben sich für die einzelnen Produktteilchen unterschiedliche Verweilzeiten (Verweilzeitspektrum). Daraus resultiert eine Streuung in der Produktqualität.

Der Erfindung liegt die Aufgabe zugrunde, ein Verfahren zu schaffen, bei dem Kohlenstoffmolekularsiebe von einheitlicher Produktqualität mit sehr guten Trenneigenschaften hergestellt werden können.

Diese Aufgabe wird erfindungsgemäß dadurch gelöst, daß man das Schwelgut bei 800°C bis 900°C 5 bis 30 Minuten durch einen Vibro-Ofen leitet, in dem im Gegenstrom ein Inertgasstrom mit einer Wasserdampfkonzentration von 20 bis 95 Vol.-% geführt wird und das so aktivierte Produkt bei 750°C bis 850°C erneut durch den Vibro-Ofen leitet, durch den im Gegenstrom ein Inertgasstrom mit einer Benzoldampfkonzentration von 5 bis 12 Vol.-% geführt wird.

Die Herstellung von Kohlenstoffmolekularsieben kann auch gemäß Anspruch 2 in zwei hintereinandergeschalteten Vibro-öfen erfolgen. Diese Verfahrensweise hat den Vorteil, daß das Kohlenstoffmolekularsieb kontinuierlich hergestellt werden kann.

Für die Herstellung der Kohlenstoffmolekularsiebe wird ein Schwelgut verwendet, das bei Temperaturen von 600 bis 900°C unter Inertgasatmosphäre in einem Drehrohrofen geschwelt worden ist. Durch die Schwelung haben sich Crackprodukte im Porensystem abgelagert, die eine ungleichmäßige Verengung der Poren bzw. eine Verstopfung des Porensystems bewirken. Um dies rückgängig zu machen, wird das Schwelgut erfindungsgemäß in dem Vibro-Ofen einer schwachen Wasserdampfaktivierung unterworfen. Bei der Aktivierung wird ein Aktivierungsgrad von 3 bis 6% erreicht.

Nach der Aktivierung erfolgt im Vibro-Ofen eine Behandlung mit Kohlenstoff abspaltenden Kohlenwaserstoffen, wie z.B. Benzol, um die Poren gezielt zu verengen.

So hergestellte Kohlenstoffmolekularsiebe erfüllen folgenden Qualitätstest :

Ein Adsorbergefäß wird mit 200 ml Kohlenstoffmolekularsieb gefüllt und jeweils eine Minute mit Luft durchströmt und anschließend eine Minute evakuiert. Nach Einstellen des dynamischen Gleichgewichts (10 Zyklen) wird in der Desorptionsphase eine Gasmenge von 420-500 ml desorbiert und analysiert.

Die mittlere Sauerstoffkonzentration des Desorptionsgases liegt bei den erfindungsgemäß hergestellten Kohlenstoffmolekularsieben im Bereich von 43-50 Vol.-% Sauerstoff.

Bei dem Vibro-Ofen besteht der Reaktionsraum aus einer horizontal angeordneten Rinne mit rechteckigem Querschnitt. Diese Rinne wird durch einen Vibrator, oder mit Hilfe eines Exzenters, in Schwingungen versetzt. Mit Hilfe dieser Schwingungen werden die einzelnen Kohlenstoffmolekularsiebteilchen durch die Rinne transportiert.

Eine vorteilhafte Ausführung des Vibro-Ofens ist ein runder Etagenofen. Hierbei wird der Feststoff auf einer Kreisbahn durch den Ofen geführt. An den übergangsstellen von einer Etage zur nächsttieferen ist die Lauffläche in der Art schräg angeschnitten, daß die Partikel, gleichgültig ob sie sich auf der Lauffläche innen oder außen befinden, in jeder Etage die gleiche Verweilzeit besitzen. Die Beheizung des Ofens erfolgt durch eine elektrische Mehrzonenheizung.

Die Heizelemente liegen als Heizmantel um den Ofen und sind im Inneren des Ofens so angeordnet, daß der Reaktionsraum im Brennpunkt der Wärmestrahlung liegt. Die Aufhängung der Vibro-Rinnen und der Heizung sind mechanisch derart voneinander getrennt, daß die Schwingungen nicht auf die Heizelemente übertragen werden können.

Durch die Anwendung des erfindungsgemäßen Verfahrens ergeben sich folgende Vorteile :

a) Die Feststoffpartikel besitzen in der Reaktionszone des Ofens alle die gleiche Verweilzeit.

b) Innerhalb der Reaktionszone herrscht annähernd die gleiche Temperatur.

c) Der Ofen besitzt ein sehr geringes Totvolumen.

d) Der Ofen ist so dicht, daß weder ein Luftsauerstoffeinbruch erfolgen kann, noch Schadstoffe nach außen gelangen können.

e) Der Verbrauch an Schutzgas zur Inertisierung ist sehr gering.

f) Der benötigte Energiebedarf ist infolge der kompakten Bauweise und guter Isolationsmöglichkeit relativ niedrig.

g) Da die Reaktionsbedingungen während der Produktion sehr genau konstant gehalten werden können, besitzt das Endprodukt eine sehr gute Qualität.

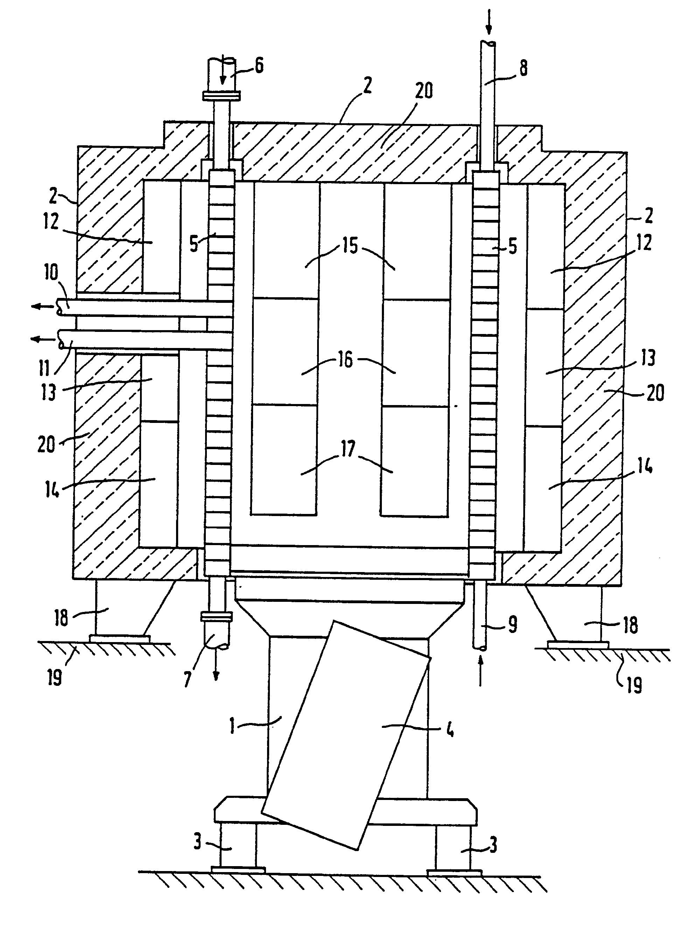

Die Erfindung wird nachfolgend anhand der Zeichnung und der Beispiele näher beschrieben.

Die Figur zeigt eine schematische Darstellung eines zur Durchführung des erfindungsgemäßen Verfahrens geeigneten Vibro-Ofens, der als runder Etagenofen ausgeführt ist.

Aus der Zeichnung geht hervor, daß der Etagenofen aus einem Schwingungsteil 1 mit Schwingfüßen 3, einem Schwingungserreger 4, horizontal ausgebildeten Etagen 5, einer Materialaufgabe 6, einem Materialabzug 7 sowie Leitungen 8, 9, 10 und 11 besteht. Der Beheizungsteil 2 umfaßt eine Dreizonenmantelheizung 12, 13, 14, eine Dreizonenmittelheizung 15, 16, 17 und eine Isolationsschicht 20.

Das zu behandelnde Material fällt durch die Materialaufgabe 6 auf die Lauffläche der obersten Etage. Der Schwingungsteil 1 wird mit dem Schwingungserreger 4 derart in Schwingung versetzt, daß das Material die einzelnen Etagen 5 mit gleichmäßiger Geschwindigkeit durchwandert. Dabei wird der Streckenunterschied der inneren Laufbahnseite zur äußeren dadurch kompensiert, daß an den übergangsstellen von einer Etage zur nächsttieferen das Ende der Abwurfkante schräg angeschnitten ist. Das behandelte Material verläßt den Ofen über einen Materialabzug 7. Durch die Leitung 8 erfolgt die Zuführung von Inertgas, das im Gleichstrom mit dem zu behandelnden Kohlenstoffmaterial durch den Ofen geleitet wird. Das Reaktionsgemisch (Stickstoff mit Wasserdampf bzw. Benzol) wird durch die Leitung 9 im Gegenstrom in den Ofen gegeben. Die Gase verlassen den Ofen über die Leitungen 10 und 11.

Im Bereich der Heizzonen 12 und 15 wird das zu behandelnde Material mit Inertgas im Gleichstrom geführt und aufgeheizt. Im Bereich der Heizzonen 13 und 14, 16 und 17 wird das Reaktionsgasgemisch im Gegenstrom geführt. Durch diese Verfahrensweise ist gewährleistet, daß nur das aufgeheizte Material mit dem Reaktionsgas in Kontakt kommt. Sämtliche Anschlüsse des Schwingungsteils 1 sind mit Wellrohren zur Schwingungsdämpfung versehen, die in der Zeichnung nicht dargestellt sind.

Der Beheizungsteil 2 ist mechanisch von dem Schwingungsteil 1 getrennt und durch die Aufhängung 18 fest mit dem Fundament 19 verbunden.

## Beispiel

Ein Schwelgut aus dem Drehrohrofen wird in dem oberen Teil des Vibro-Etagenofens mit Stickstoff im Gleichstrom auf eine Reaktionstemperatur von 860°C erhitzt. In der Reaktionszone des Vibro-Ofens wird Stickstoff mit einem Wasserdampfgehalt von 35 Vol-% im Gegenstrom geführt. Die Verweilzeit in der Reaktionszone beträgt 15 Minuten. Es wird ein Aktivierungsgrad von 5% erreicht. Das erhaltene Aktivat wird anschliessend im Vibro-Ofen mit Benzol nachbehandelt. Dabei wird ein Stickstoff-Benzol-Gemisch mit 8 Vol.-% im Gegenstrom bei 800°C durch den Vibro-Ofen geführt. Die Verweilzeit beträgt 4 Minuten. Die Eigenschaften des Schwelgutes und des erhaltenen Molekularsiebkokses sind aus der Tabelle ersichtlich.

## Vergleichsbeispiel 1

Das Schwelgut aus dem Drehrohrofen wird bei 800°C im Drehrohrofen mit Benzol behandelt. Die Reaktionstemperatur beträgt 800°C und die mittlere Verweilzeit 25 Minuten. Ein Stickstoffstrom mit 3 Vol.-% Benzol wird im Gegenstrom durch den Drehrohrofen geführt. Die Eigenschaften des erhaltenen Molekularsiebes sind in der Tabelle aufgeführt.

## Vergleichsbeispiel 2

Das gleiche Schwelgut wie im Beispiel und im Vergleichsbeispiel 1 wird bei einer Temperatur von 810°C im Drehrohrofen aktiviert. Die Verweilzeit beträgt 65 Minuten und das Reaktionsgas, das im Gegenstrom geführt wird, enthält 75 Vol.-% Wasserdampf. Das erhaltene Aktivat wird bei 810°C im Drehrohrofen mit einem Benzol-Stickstoff-Gemisch behandelt. Die Benzolkonzentration im Stickstoff beträgt 6%, die Verweilzeit des Siebmaterials beträgt 16 Minuten. Die Eigenschaften des Kohlenstoffmolekularsiebes sind ebenfalls in der Tabelle aufgeführt.

Aus dem Beispiel und den Vergleichsbeispielen ist ersichtlich, daß die Eigenschaften des Kohlenstoffmolekularsiebes durch die gezielte Aktivierung verbessert werden. Das im Vibro-Ofen hergestellte Material besitzt die besten Trenneigenschaften.

## TABELLE

| | BEISPIEL | Vergleichs-beispiel 1 | Vergleichs-beispiel 2 |
|---|---|---|---|
| | Material nach der Schwelung im Drehrohrofen (Schwelgut) | Material nach der Aktivierung ·und der Nachbehandlung im Vibro-Ofen | Material nach der Schwelung und $C_6H_6$-Nachbehandlung im Drehrohrofen | Material nach Aktivierung + $C_6H_6$-Behandlung im Drehrohrofen |
| Einwaage 200 ml Adsorber (g) | 126,5 | 124,6 | 121,5 | 124,5 |
| desorbierte Gasmenge (ml) | 635 | 450 | 450 | 450 |
| mittlere $O_2$-Konzentration (% $O_2$) | 31,5 | 48,3 | 36 | 44,5 |

EP 0 308 409 B1

## Ansprüche

1. Verfahren zur Herstellung von Kohlenstoffmolekularsieben für die Trennung von Sauerstoff und Stickstoff, bei dem ein Schwelgut mit einem Gehalt an flüchtigen Bestandteilen bis zu 5% mit kohlenstoffabspaltenden Kohlenwasserstoffen behandelt wird, die im Kohlenstoffgerüst des Schwelgutes unter Verengung schon vorhandener Poren reagieren, dadurch gekennzeichnet, daß man das Schwelgut bei 800°C bis 900°C 5 bis 30 Minuten durch einen Vibro-Ofen leitet, in dem im Gegenstrom ein Inertgasstrom mit einer Wasserdampfkonzentration von 20 bis 95 Vol.-% geführt wird, und dieses schwach aktivierte Produkt bei 750°C bis 850°C erneut durch den Vibro-Ofen leitet, durch den im Gegenstrom ein Inertgasstrom mit einer Benzoldampfkonzentration von 5 bis 12 Vol.-% geführt wird.

2. Verfahren zur Herstellung von Kohlenstoffmolekularsieben für die Trennung von Sauerstoff und Stickstoff, bei dem ein Schwelgut mit einem Gehalt an flüchtigen Bestandteilen bis zu 5% mit kohlenstoffabspaltenden Kohlenwasserstoffen behandelt wird, die im Kohlenstoffgerüst des Schwelgutes unter Verengung schon vorhandener Poren reagieren, dadurch gekennzeichnet, daß man das Schwelgut bei 800°C bis 900°C 5 bis 30 Minuten durch einen Vibro-Ofen leitet, in dem im Gegenstrom ein Inertgasstrom mit einer Wasserdampfkonzentration von 20 bis 95 Vol.-% geführt wird, und dieses schwach aktivierte Produkt bei 750°C bis 850°C durch einen zweiten Vibro-Ofen leitet, in dem im Gegenstrom ein Inertgasstrom mit einer Benzoldampfkonzentration von 5 bis 12 Vol.-% geführt wird.

## Claims

1. A method of manufacturing carbon molecular sieves for separating oxygen and nitrogen, in which a low-temperature-carbonisation material containing volatile constituents up to 5% is treated with carbon-cracking hydrocarbons which react in the carbon structure of the low-temperature-carbonisation material as existing pores contract, characterised in that the low-temperature-carbonisation material is passed through a vibro-furnace for 5 to 30 minutes at 800°C to 900°C, in which furnace an inert gas flow with a water vapour concentration of 20 to 95 vol.% is fed in counter-current, and this weakly activated product is once more passed through the vibro-furnace at 750°C to 850°C, through which furnace an inert gas flow with a benzene vapour concentration of 5 to 12 vol.% is fed in counter-current.

2. A method of manufacturing carbon molecular sieves for separating oxygen and nitrogen, in which a low-temperature-carbonisation material containing volatile constituents up to 5% is treated with carbon-cracking hydrocarbons which react in the carbon structure of the low-temperature-carbonisation material as existing pores contract, characterised in that the low-temperature-carbonisation material is passed through a vibro-furnace for 5 to 30 minutes at 800°C to 900°C, in which furnace an inert gas flow with a water vapour concentration of 20 to 95 vol.% is fed in counter-current, and this weakly activated product is passed through a second vibro-furnace at 750°C to 850°C, in which furnace an inert gas flow with a benzene vapour concentration of 5 to 12 vol.% is fed in counter-current.

## Revendications

1. Procédé de fabrication de tamis moléculaires en carbone, destinés à la séparation de l'oxygène et de l'azote, conformément auquel on traite un produit ou une matière à carboniser, qui comporte une teneur en constituants volatils allant jusqu'à 5%, par des hydrocarbures qui libèrent du carbone et qui réagissent dans l'ossature carbonée du produit à carboniser sous rétrécissement ou reserrement de pores déjà présents, caractérisé en ce que l'on fait passer la matière ou le produit à carboniser à 800°C-900°C pendant 5 à 30 minutes à travers un four à vibration, dans lequel on fait circuler en contrecourant un courant de gaz inerte d'une concentration en vapeur d'eau de 20 à 95% en volume et on reconduit ce produit faiblement activé à une température de 750°C à 850°C à travers le four à vibration, dans lequel on fait circuler en contrecourant un courant de gaz inerte avec une concentration en vapeur de benzène de 5 à 12% en volume.

2. Procédé de fabrication de tamis moléculaires en carbone, destinés à la séparation de l'oxygène et de l'azote, conformément auquel on traite un produit ou une matière à carboniser, qui comporte une teneur en constituants volatils allant jusqu'à 5%, par des hydrocarbures qui libèrent du carbone et qui réagissent dans l'ossature carbonée du produit à carboniser sous rétrécissement ou reserrement de pores déjà présents, caractérisé en ce que l'on fait passer la matière ou le produit à carboniser à 800°C-900°C pendant 5 à 30 minutes à travers un four à vibration, dans lequel on fait circuler en contrecourant un courant de gaz inerte d'une concentration en vapeur d'eau de 20 à 95% en volume et on conduit ce produit faiblement activé à une température de 750°C à 850°C à travers un second four à vibration, dans lequel on fait passer à contrecourant un courant de gaz inerte avec une concentration en vapeur de benzène de 5 à 12% en volume.